# DEMANDE DE BREVET EUROPEEN

(11) **EP 2 769 881 A1**
(43) Date de publication de la demande: **27.08.2014**
(21) Numéro de dépôt: 14155835.3
(22) Date de dépôt: 19.02.2014
(51) Int. Cl.: B60R 5/04

(54) **Système de recouvrement des bagages pour un véhicule automobile**

(30) Priorité: 26.02.2013 FR 1351693
(71) Demandeur: CENTRE D'ETUDE ET DE RECHERCHE POUR L'AUTOMOBILE (CERA), 51100 Reims (FR)
(72) Inventeur: De Vismes, Bertrand, 78000 Versailles (FR); Gallois, Aude, 51110 Warmeriville (FR)
(74) Mandataire: Sayettat, Julien Christian

(57) **Abrégé**

L'invention concerne un système (1) de recouvrement des bagages pour un véhicule automobile, ledit système comprenant un cache bagages et deux ébénisteries (3) latérales, ledit cache bagages comprenant : un rideau et un dispositif de rappel dudit rideau associé à son bord avant ; une bavette de rigidification associée le long de son bord arrière, ladite bavette comprenant deux parties latérales (9), lesdites parties comprenant une face inférieure de glissement (10) et un moyen d'emboitement (11) respectifs, chacune desdites ébénisteries comprenant : une piste (12) de coulissement longitudinal d'une face inférieure (10) respective ; un moyen d'emboîtement réciproque arrière permettant de disposer ledit rideau en configuration complètement déployée ; un moyen d'emboîtement réciproque intermédiaire (14) permettant de disposer ledit rideau en configuration partiellement déployée, chaque moyen réciproque intermédiaire (14) pouvant être amené de façon réversible d'un état actif, où il est apte à coopérer avec ledit moyen d'emboitement correspondant, à un état inactif, où il est inapte à coopérer avec ledit moyen d'emboitement.

## Description

L'invention concerne un système de recouvrement des bagages d'un véhicule automobile et une ébénisterie d'un tel système.

Il est connu de réaliser un système de recouvrement des bagages pour un véhicule automobile, ledit système comprenant un cache bagages et deux ébénisteries latérales de compartiment à bagages, ledit cache bagages comprenant :
- un rideau souple comprenant un bord avant et un bord arrière,
- un dispositif de rappel dudit rideau associé audit bord avant, de sorte que ledit rideau puisse être actionné entre des configurations déployées de recouvrement dudit compartiment et une configuration rétractée de rangement,
- une bavette de rigidification associée le long dudit bord arrière, ladite bavette comprenant deux parties latérales, lesdites parties comprenant une face inférieure de glissement et un moyen d'emboitement respectifs,
chacune desdites ébénisteries comprenant :
- une piste de coulissement longitudinal d'une face inférieure respective,
- un moyen d'emboîtement réciproque arrière permettant de disposer ledit rideau en configuration complètement déployée,
- un moyen d'emboîtement réciproque intermédiaire permettant de disposer ledit rideau en configuration partiellement déployée.

Avec la possibilité de réaliser un déploiement partiel du rideau, l'utilisateur n'a pas à retirer des objets éventuellement déposés sur ledit rideau lorsqu'il veut le rétracter, depuis sa configuration complètement déployée, pour faciliter l'accès au compartiment à bagages du véhicule, lesdits objets étant retenus par la partie de rideau restant déployée.

En outre, la remise en place du rideau en configuration complètement déployée est facilitée dans la mesure où la bavette, qui doit être actionnée en traction vers l'arrière pour déployer ledit rideau, est plus proche de l'utilisateur que lorsque ledit rideau est en configuration rétractée.

Malgré les avantages présentés par un tel agencement, l'utilisateur peut préférer, au moins dans certaines occasions, que le rideau ne soit actionnable qu'entre sa configuration rétractée et sa configuration complètement déployée, sans possibilité d'un arrêt dudit rideau en configuration partiellement déployée.

L'invention a pour but de proposer un système de recouvrement qui permette de satisfaire à cette exigence.

A cet effet, l'invention propose un système de recouvrement des bagages pour un véhicule automobile, ledit système comprenant un cache bagages et deux ébénisteries latérales de compartiment à bagages, ledit cache bagages comprenant :
- un rideau souple comprenant un bord avant et un bord arrière,
- un dispositif de rappel dudit rideau associé audit bord avant, de sorte que ledit rideau puisse être actionné entre des configurations déployées de recouvrement dudit compartiment et une configuration rétractée de rangement,
- une bavette de rigidification associée le long dudit bord arrière, ladite bavette comprenant deux parties latérales, lesdites parties comprenant une face inférieure de glissement et un moyen d'emboitement respectifs,
chacune desdites ébénisteries comprenant :
- une piste de coulissement longitudinal d'une face inférieure respective,
- un moyen d'emboîtement réciproque arrière permettant de disposer ledit rideau en configuration complètement déployée,
- un moyen d'emboîtement réciproque intermédiaire permettant de disposer ledit rideau en configuration partiellement déployée,
chaque moyen réciproque intermédiaire pouvant être amené de façon réversible d'un état actif, où il est apte à coopérer avec ledit moyen d'emboitement correspondant, à un état inactif, où il est inapte à coopérer avec ledit moyen d'emboitement.

Dans cette description, les termes de positionnement dans l'espace (bas, inférieur, latéral, avant, arrière, dessus, dessous, longitudinal,...) sont pris en référence au système disposé dans le véhicule.

Lorsqu'il est dit qu'une ébénisterie comprend un moyen d'emboîtement réciproque intermédiaire, cela signifie que ledit moyen fait partie intégrante de ladite ébénisterie.

En d'autres termes, le moyen d'emboîtement réciproque intermédiaire est non amovible.

Ceci écarte en particulier toute réalisation où le moyen d'emboîtement réciproque intermédiaire serait un composant amovible, monté ou non sur l'ébénisterie selon que l'utilisateur souhaite ou non disposer d'une possibilité d'arrêt intermédiaire.

Une telle réalisation, basée sur un composant amovible, présente l'inconvénient pour l'utilisateur de devoir ranger le moyen d'emboîtement réciproque intermédiaire dans un rangement approprié lorsqu'il n'est pas monté.

Avec l'agencement proposé ici, l'utilisateur n'a pas à se soucier de cette problématique de rangement, le moyen d'emboîtement réciproque intermédiaire restant à demeure partie intégrante de l'ébénisterie.

D'autres particularités et avantages de l'invention apparaîtront dans la description qui suit, faite en référence aux figures jointes, dans lesquelles :
- la figure 1 est une représentation schématique en perspective d'un système selon une réalisation, le rideau étant en configuration partiellement déployée,
- la figure 2 est une vue latérale schématique en coupe longitudinale partielle de détail du système de la figure 1, sur une zone montrant un moyen d'emboîtement réciproque intermédiaire, un moyen d'emboitement étant situé en avant dudit moyen réciproque (A) et emboité avec ledit moyen réciproque (B).

En référence aux figures, on décrit un système 1 de recouvrement des bagages pour un véhicule automobile, ledit système comprenant un cache bagages 2 et deux ébénisteries 3 latérales de compartiment à bagages, ledit cache bagages comprenant :
- un rideau 4 souple comprenant un bord avant 5 et un bord arrière 6,
- un dispositif de rappel 7 dudit rideau associé audit bord avant, de sorte que ledit rideau puisse être actionné entre des configurations déployées de recouvrement dudit compartiment et une configuration rétractée de rangement,
- une bavette 8 de rigidification associée le long dudit bord arrière, ladite bavette comprenant deux parties latérales 9, lesdites parties comprenant une face inférieure 10 de glissement et un moyen d'emboitement 11 respectifs,
chacune desdites ébénisteries comprenant :
- une piste 12 de coulissement longitudinal d'une face inférieure 10 respective,
- un moyen d'emboîtement réciproque arrière 13 permettant de disposer ledit rideau en configuration complètement déployée,
- un moyen d'emboîtement réciproque intermédiaire 14 permettant de disposer ledit rideau en configuration partiellement déployée,
chaque moyen réciproque intermédiaire 14 pouvant être amené de façon réversible d'un état actif, où il est apte à coopérer avec ledit moyen d'emboitement correspondant, à un état inactif, où il est inapte à coopérer avec ledit moyen d'emboitement.

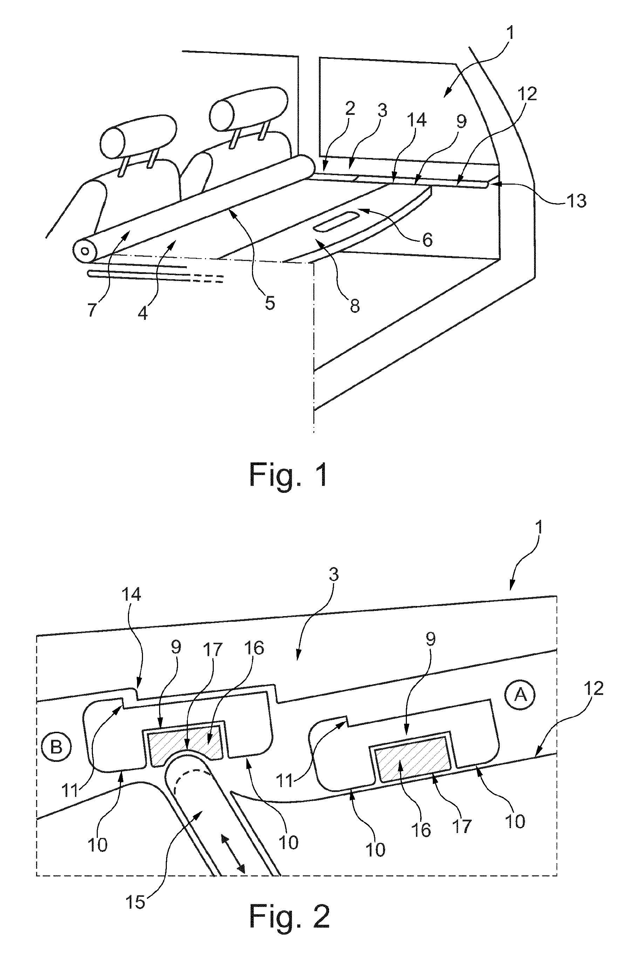

Selon la réalisation représentée en figure 2, le système 1 comprend, pour chaque moyen réciproque intermédiaire 14, une pièce de désactivation 15 respective, chacune desdites pièces étant actionnable de façon réversible entre une position stable active, entrainant une activation dudit moyen correspondant, et une position stable inactive, entrainant une désactivation dudit moyen.

Les pièces de désactivation 15 peuvent être actionnables selon diverses variantes : rotation, translation (comme représenté), ...

Selon la réalisation représentée en figure 2, le système 1 comprend deux moyens ressort 16 - ici sous forme de profilés en élastomère, et en variante non représentée sous forme de ressorts métalliques - montés respectivement en dessous des parties latérales 9, lesdits moyens ressort présentant une zone inférieure d'appui 17 disposée en retrait - c'est à dire décalée vers le haut - par rapport à la face de glissement 10 correspondante ou affleurant ladite face, les moyens réciproques intermédiaires 14 - chaque moyen 14 étant ici sous forme de deux butées - étant disposés au-dessus et à distance des pistes 12, les pièces de désactivation 15 étant montées sur lesdites pistes sensiblement en dessous desdits moyens réciproques intermédiaires, lesdites pièces en position active formant des bossages par rapport auxdites pistes, lesdites pièces s'escamotant vers le bas pour atteindre leur position inactive, les moyens d'emboitement 11 - chaque moyen 11 étant ici sous forme de deux contre butées - et lesdits moyens réciproques intermédiaires étant respectivement agencés pour, lorsque lesdites pièces sont en position active :
- s'emboiter entre eux sous la poussée desdits moyens ressort, par mise en contact desdites zones d'appui avec lesdites pièces, de manière à bloquer le rideau 4 en configuration partiellement déployée,
- et pour se déboiter les uns des autres par un appui exercé vers le bas sur la bavette 8, à l'encontre desdits moyens ressort, de manière à permettre un retour dudit rideau vers sa configuration rétractée.

Avec l'agencement proposé, l'emboitement se fait par simple traction de la bavette vers l'arrière en amenant les moyens d'emboîtement 11 et d'emboitement réciproque intermédiaire 14 à s'emboiter les uns dans les autres sous l'action des moyens ressort 16.

En effet, lors de la mise des moyens d'emboitement 11,14 en regard l'un de l'autre, les moyens ressort 16 sont comprimés par les bossages, ce qui a pour effet de permettre l'emboîtement desdits moyens entre eux.

Quant au déboitement, il se fait par simple poussée de la bavette 8 vers le bas, à l'encontre des moyens ressort 16, ce qui a pour effet de dégager les moyens d'emboîtement 11,14 les uns des autres, le rideau 4 étant alors rappelé vers sa configuration rétractée au moyen du dispositif de rappel 7.

Le fait que les zones d'appui 17 des moyens ressort 16 sont en retrait par rapport aux faces de glissement 10 correspondante, ou qu'elles affleurent lesdites faces, implique que lesdites zones d'appui ne frottent pas, ou quasiment pas, contre les pistes 12 lors du glissement des parties latérales 9 sur lesdites pistes pendant le déploiement ou la rétraction du rideau 4.

Il en résulte une suppression du risque d'abrasion des zones d'appui 17 par les pistes 12, ou desdites pistes par lesdites zones d'appui, qui pourrait se produire du fait d'un frottement entre les deux lors du glissement des parties latérales 9 sur lesdites pistes.

De façon non représentée, les moyens d'emboîtement réciproques arrière 13 sont analogues aux moyens intermédiaires 14, un bossage étant prévu en zone arrière des pistes 12.

De façon non représentée, les pièces de désactivation 15 peuvent être montées sur les pistes 12 par l'intermédiaire de mécanismes de type « push-push », lesdits mécanismes étant agencés pour permettre un passage desdites pièces de leur position active - respectivement inactive - à leur position inactive - respectivement active - par appui exercé sur lesdites pièces pour les déplacer en dessous de leur position inactive.

Dans la réalisation représentée en figure 2, l'appui exercé sur les pièces de désactivation 15, pour les passer d'une position vers l'autre, se fait vers le bas (la pièce en position inactive étant indiquée en pointillés).

Les mécanismes de type « push-push » sont bien connus et utilisés dans de nombreux domaines, par exemple dans les stylos à bille pour extraire ladite bille de son carter de protection ou bien pour la ranger dedans lorsque le stylo n'est plus utilisé.

Avec un tel agencement, l'utilisateur souhaitant désactiver l'arrêt du rideau 4 en position partiellement déployée a simplement à appuyer sur les pièces de désactivation 15 pour les disposer en position inactive.

S'il veut réactiver l'arrêt du rideau 4 en position partiellement déployée, il appuie à nouveau sur les pièces de désactivation 15 pour les disposer en position active.

Selon une variante non représentée, les moyens réciproques intermédiaires 14 sont montés mobiles par rapport aux ébénisteries 3, de manière à pouvoir passer de façon réversible d'une position active définissant leur état actif à une position inactive définissant leur état inactif.

Les moyens réciproques intermédiaires 14 peuvent être actionnables selon diverses variantes : rotation, translation, ...

Il peut être notamment prévu de monter les moyens réciproques intermédiaires 14 par l'intermédiaire de mécanismes de type « push-push », tels qu'évoqués plus haut, pour permettre le passage desdits moyens d'une position à l'autre.

En particulier, les moyens réciproques intermédiaires 14 peuvent passer de leur position active à leur position inactive par escamotage latéral vers l'extérieur. Un tel agencement permet de supprimer les interférences non voulues entre le rideau 4 et les moyens réciproques intermédiaires 14 lors du déploiement ou de la rétraction dudit rideau.

On décrit à présent une ébénisterie 3 pour un système 1, ladite ébénisterie comprenant un moyen d'emboitement réciproque intermédiaire 14 destiné à coopérer avec un moyen d'emboitement 11 prévu sur une partie latérale 9 de bavette 8 de cache bagages 2, ledit moyen réciproque intermédiaire pouvant être amené de façon réversible d'un état actif, dans lequel il est destiné à coopérer avec ledit moyen d'emboitement, à un état inactif, dans lequel il est destiné à ne pas pouvoir coopérer avec ledit moyen d'emboitement.

Selon la réalisation représentée en figure 2, l'ébénisterie 3 comprend une pièce de désactivation 15 du moyen réciproque intermédiaire 14, ladite pièce étant actionnable de façon réversible entre une position stable active, entrainant une activation dudit moyen, et une position stable inactive, entrainant une désactivation dudit moyen.

Selon une variante non représentée, le moyen réciproque intermédiaire 14 est monté mobile par rapport à l'ébénisterie 3, de manière à pouvoir passer de façon réversible d'une position active définissant son état actif à une position inactive définissant son état inactif.

## Revendications

1. Système (1) de recouvrement des bagages pour un véhicule automobile, ledit système comprenant un cache bagages (2) et deux ébénisteries (3) latérales de compartiment à bagages, ledit cache bagages comprenant :
• un rideau (4) souple comprenant un bord avant (5) et un bord arrière (6),
• un dispositif de rappel (7) dudit rideau associé audit bord avant, de sorte que ledit rideau puisse être actionné entre des configurations déployées de recouvrement dudit compartiment et une configuration rétractée de rangement,
• une bavette (8) de rigidification associée le long dudit bord arrière, ladite bavette comprenant deux parties latérales (9), lesdites parties comprenant une face inférieure de glissement (10) et un moyen d'emboitement (11) respectifs,
chacune desdites ébénisteries comprenant :
• une piste (12) de coulissement longitudinal d'une face inférieure (10) respective,
• un moyen d'emboîtement réciproque arrière (13) permettant de disposer ledit rideau en configuration complètement déployée,
• un moyen d'emboîtement réciproque intermédiaire (14) permettant de disposer ledit rideau en configuration partiellement déployée,
ledit système étant **caractérisé en ce que** chaque moyen réciproque intermédiaire (14) peut être amené de façon réversible d'un état actif, où il est apte à coopérer avec ledit moyen d'emboitement correspondant, à un état inactif, où il est inapte à coopérer avec ledit moyen d'emboitement.

2. Système selon la revendication 1, **caractérisé en ce que** qu'il comprend, pour chaque moyen réciproque intermédiaire (14), une pièce de désactivation (15) respective, chacune desdites pièces étant actionnable de façon réversible entre une position stable active, entrainant une activation dudit moyen correspondant, et une position stable inactive, entrainant une désactivation dudit moyen.

3. Système selon la revendication 2, **caractérisé en ce qu'**il comprend deux moyens ressort (16) montés respectivement en dessous des parties latérales (9), lesdits moyens ressort présentant une zone inférieure d'appui (17) disposée en retrait par rapport à la face de glissement (10) correspondante ou affleurant ladite face, les moyens réciproques intermédiaires (14) étant disposés au-dessus et à distance des pistes (12), les pièces de désactivation (15) étant montées sur lesdites pistes sensiblement en dessous desdits moyens réciproques intermédiaires, lesdites pièces en position active formant des bossages par rapport auxdites pistes, lesdites pièces s'escamotant vers le bas pour atteindre leur position inactive, les moyens d'emboitement (11) et lesdits moyens réciproques intermédiaires étant respectivement agencés pour, lorsque lesdites pièces sont en position active :
• s'emboiter entre eux sous la poussée desdits moyens ressort, par mise en contact desdites zones d'appui avec lesdites pièces, de manière à bloquer le rideau (4) en configuration partiellement déployée,
• et pour se déboiter les uns des autres par un appui exercé vers le bas sur la bavette (8), à l'encontre desdits moyens ressort, de manière à permettre un retour dudit rideau vers sa configuration rétractée.

4. Système selon la revendication 2 ou 3, **caractérisé en ce que** les pièces de désactivation (15) sont montées sur les pistes (12) par l'intermédiaire de mécanismes de type « push-push », lesdits mécanismes étant agencés pour permettre un passage desdites pièces de leur position active - respectivement inactive - à leur position inactive - respectivement active - par appui exercé sur lesdites pièces pour les déplacer en dessous de leur position inactive.

5. Système selon la revendication 1, **caractérisé en ce que** les moyens réciproques intermédiaires (14) sont montés mobiles par rapport aux ébénisteries (3), de manière à pouvoir passer de façon réversible d'une position active définissant leur état actif à une position inactive définissant leur état inactif.

6. Système selon la revendication 5, **caractérisé en ce que** les moyens réciproques intermédiaires (14) passent de leur position active à leur position inactive par escamotage latéral vers l'extérieur.

7. Ebénisterie (3) pour un système selon l'une quelconque des revendications 1 à 6, **caractérisée en ce qu'**elle comprend un moyen d'emboitement réciproque intermédiaire (14) destiné à coopérer avec un moyen d'emboitement (11) prévu sur une partie latérale (9) de bavette (8) de cache bagages (2), ledit moyen réciproque intermédiaire pouvant être amené de façon réversible d'un état actif, dans lequel il est destiné à coopérer avec ledit moyen d'emboitement, à un état inactif, dans lequel il est destiné à ne pas pouvoir coopérer avec ledit moyen d'emboitement.

8. Ebénisterie selon la revendication 7, **caractérisée en ce qu'**elle comprend une pièce de désactivation (15) du moyen réciproque intermédiaire (14), ladite pièce étant actionnable de façon réversible entre une position stable active, entrainant une activation dudit moyen, et une position stable inactive, entrainant une désactivation dudit moyen.

9. Ebénisterie selon la revendication 7, **caractérisée en ce que** le moyen réciproque intermédiaire (14) est monté mobile par rapport à ladite ébénisterie, de manière à pouvoir passer de façon réversible d'une position active définissant son état actif à une position inactive définissant son état inactif.
